# EUROPÄISCHE PATENTANMELDUNG

(11) **EP 1 335 570 A1**
(43) Veröffentlichungstag der Anmeldung: **13.08.2003**
(21) Anmeldenummer: 02002909.6
(22) Anmeldetag: 09.02.2002
(51) Int. Cl.: H04M 3/42, H04M 3/533

(54) **Verfahren zur Verwaltung von Sprachbausteinen in einem Sprachnachrichtenverwaltungssystem**

(71) Anmelder: SIEMENS AKTIENGESELLSCHAFT, 80333 München (DE)
(72) Erfinder: Barbarics, Lajos, 2030 Erd (HU); Nagy, Lajos, 2081 Pilliscsaba (HU); Pfalzmann, Erich, 1220 Wien (AT); Spahl, Siegfried, 82178 Puchheim (DE)
(74) Vertreter: Peham, Alois, Dipl.-Ing.

(57) **Zusammenfassung**

Es wird ein Sprachnachrichtenverwaltungssystem und ein Verfahren zur Verwaltung von Sprachbausteinen in einem Sprachnachrichtenverwaltungssystem angegeben, bei dem einem bestimmten Zustandswechsel oder einem bestimmten Ereignis zugeordneter Sprachbaustein auf einem Kanal des Systems, welcher mit einem Gesprächskanal des Telekommunikationsnetzes verbunden wird, ausgegeben wird.

## Beschreibung

Verfahren zur Verwaltung von Sprachbausteinen in einem Sprachnachrichtenverwaltungssystem.

Die Erfindung betrifft ein Sprachnachrichtenverwaltungssystem und ein Verfahren zur Verwaltung von Sprachbausteinen in einem Sprachnachrichtenverwaltungssystem.

In modernen Telekommunikationsnetzen werden häufig Sprachautomaten eingesetzt, um die Erbringung eines Dienstes zu vereinfachen. Ein Beispiel dafür ist eine automatische Ansage zur Hilfestellung bei der Eingabe eines Terminwunsches, etwa "Geben Sie bitte die gewünschte Weckzeit ein!"

Bekannt ist auch das Einspielen von Sprachbausteinen in eine bestehende Gesprächsverbindung zweier Teilnehmer in einem Telekommunikationsnetz. Eine solche Ansage kann sich dabei beispielsweise auf ein Warnung bei Unterschreiten eines einem Teilnehmer zugeordneten Kontostandes beziehen, etwa "Ihr Guthabenstand beträgt derzeit x Euro."

Derartige Sprachbausteine werden in der Regel direkt in einem Vermittlungsknoten verwaltet, was dazu führt, dass diese nur unter erheblichem technischen Aufwand verändert werden können.

Aufgabe der Erfindung ist es daher, ein verbessertes Verfahren zur Verwaltung von Sprachbausteinen in einem Sprachnachrichtenverwaltungssystem anzugeben.

Dies geschieht erfindungsgemäß mit einem Verfahren der eingangs genannten Art,
- bei dem von einem Vermittlungsknoten in einem Telekommunikationsnetz eine Meldung an das Sprachnachrichtenverwaltungssystem gesendet wird, wenn das Telekommunikationsnetz von einem ersten Zustand in einen zweiten Zustand wechselt und/oder ein vorgebbares Ereignis auftritt,
- bei dem ein diesem Zustandswechsel oder diesem Ereignis zugeordneter Sprachbaustein vom Sprachnachrichtenverwaltungssystem auf einem Kanal des Systems ausgegeben wird und
- bei dem dieser Kanal mit einem Gesprächskanal des Telekommunikationsnetzes verbunden wird.

Beim erfindungsgemäßen Verfahren werden vorteilhaft die in einem Vermittlungsknoten ablaufenden Prozesse von den für die Verwaltung von Sprachbausteinen nötigen Abläufen entkoppelt. Daraus resultiert eine vereinfachte Handhabung eines Sprachnachrichtenverwaltungssystem, sowie eine Entlastung der für einen Vermittlungsknoten vorgesehen Ressourcen.

Günstig ist es auch, wenn der Gesprächskanal zum Zeitpunkt der Ausgabe des Sprachbausteins bereits zumindest einen ersten Teilnehmer und einen zweiten Teilnehmer eines Telekommunikationsnetzes verbindet.

Die Anzahl der Anwendungsfälle, für die das erfindungsgemäße Verfahren genutzt werden kann, wird somit erheblich gesteigert. Beispielsweise können die Gesprächsteilnehmer darüber informiert werden, daß ein Mitschnitt des laufenden Gespräches angelegt wird, etwa durch die Ansage: "Achtung, aufgrund des Wunsches von Teilnehmer x wird das folgende Gespräch aufgezeichnet."

Ein günstiges Verfahren ist weiterhin dann gegeben, wenn als Sprachbaustein zumindest ein Teil des auf dem Gesprächskanal laufenden Gesprächs vorgesehen wird.

Hierbei kann ein Mitschnitt eines Telefongesprächs beispielsweise zu Kontrollzwecken nochmals abgehört werden. Erhält der Inhalt der Aufzeichnung nicht die Zustimmung beider Gesprächspartner, so kann dessen Löschung vorgesehen werden.

Die erfindungsgemäße Aufgabe wird auch mit einem Sprachnachrichtenverwaltungssystem gelöst,
- bei dem dieses Mittel zum Empfang von Meldungen des
   Vermittlungsknotens über Zustandsänderungen und/oder über das Auftreten vorgebbarer Ereignisse umfasst,
bei dem dieses Mittel zur Ausgabe eines Sprachbausteins auf einem Kanal des Systems umfasst und
- bei dem dieses Mittel zur Verbindung dieses Kanals mit einem Gesprächskanal des Telekommunikationsnetzes umfasst.

Durch die vom Vermittlungsknoten abgesetzte Anordnung des Sprachnachrichtenverwaltungssystem können die Sprachbausteine mit vergleichsweise geringem technischen Aufwand verändert werden. Dasselbe gilt für das dem System zugrunde liegende Regelwerk, welches einer bestimmten Zustandsänderung und/oder dem Auftreten eines bestimmten Ereignisses die Ausgabe eines bestimmten Sprachbausteines zuordnet.

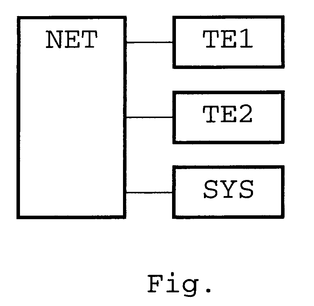

Die Erfindung wird anhand eines in der Figur dargestellten Ausführungsbeispiels näher erläutert, welches ein beispielhaftes Sprachnachrichtenverwaltungssystem, sowie einen beispielhaften Prozeßablauf in einem solchen System betrifft.

Die Figur zeigt ein Telekommunikationsnetz NET, einen ersten und einen zweiten an das Telekommunikationsnetz NET angeschlossenen Teilnehmer TE1 und TE2 sowie ein Sprachnachrichtenverwaltungssystem SYS, das ebenfalls mit dem Telekommunikationsnetz NET verbunden ist.

Die Funktion der in der Figur gezeigten Anordnung ist wie folgt:

Es wird davon ausgegangen, daß zwischen dem ersten und dem zweiten Teilnehmer TE1 und TE2 eine Gesprächsverbindung über das Telekommunikationsnetz NET geschalten wird. In Folge teilt beispielsweise der erste Teilnehmer TE1 dem Telekommunikationsnetz, etwa durch Drücken einer dafür vorgesehen Taste, mit, daß er einen Mitschnitt vom laufenden Gespräch mit dem zweiten Teilnehmer TE2 wünscht.

Dieser Wunsch wird vom Telekommunikationsnetz NET entgegengenommen und an das Sprachnachrichtenverwaltungssystem SYS weitergereicht. Von diesem wird zum Beispiel der Hinweis "Achtung, Gespräch wird mitgeschnitten" in die Gesprächsverbindung zwischen erstem und zweitem Teilnehmer TE1 und TE2 eingespielt und sodann die Aufzeichnung gestartet. Durch einen weiteren Tastendruck kann etwa die Gesprächsaufzeichnung wieder gestoppt werden.

Bevor das Gespräch dauerhaft gespeichert wird, erfolgt eine Anfrage an beide Teilnehmer, ob sie mit diesem Vorgang einverstanden sind, wobei der aufgezeichnete Teil des Gesprächs zu Kontrollzwecken nochmals abgespielt wird. Liegt das Einverständnis beider Teilnehmer vor, so erfolgt die permanente Speicherung dieser Sprachnachricht.

Das angeführte Beispiel soll nur eine Möglichkeit zur Umsetzung des erfindungsgemäßen Verfahrens zeigen und kann keinesfalls als Einschränkung des breiten Anwendungsbereiches dem Erfindung dienen.

In diesem Zusammenhang wird auch darauf hingewiesen, dass sich die Erfindung nicht nur auf verbindungsorientierte Telekommunikationsnetze, sondern selbstverständlich auch auf paketvermittelte Telekommunikationsnetze bezieht.

## Patentansprüche

1. Verfahren zur Verwaltung von Sprachbausteinen in einem Sprachnachrichtenverwaltungssystem,
**dadurch gekennzeichnet,**
- **dass** von einem Vermittlungsknoten in einem Telekommunikationsnetz eine Meldung an das Sprachnachrichtenverwaltungssystem gesendet wird, wenn das Telekommunikationsnetz von einem ersten Zustand in einen zweiten Zustand wechselt und/oder ein vorgebbares Ereignis auftritt,
- **dass** ein diesem Zustandswechsel oder diesem Ereignis zugeordneter Sprachbaustein vom Sprachnachrichtenverwaltungssystem auf einem Kanal des Systems ausgegeben wird und
- **dass** dieser Kanal mit einem Gesprächskanal des Telekommunikationsnetzes verbunden wird.

2. Verfahren nach Anspruch 1, **dadurch gekennzeichnet, dass** der Gesprächskanal zum Zeitpunkt der Ausgabe des Sprachbausteins bereits zumindest einen ersten Teilnehmer und einen zweiten Teilnehmer eines Telekommunikationsnetzes verbindet.

3. Verfahren nach einem der Ansprüche 1 bis 2, **dadurch gekennzeichnet, dass** als Sprachbaustein zumindest ein Teil des auf dem Gesprächskanal laufenden Gesprächs vorgesehen wird.

4. Sprachnachrichtenverwaltungssystem,
**dadurch gekennzeichnet,**
- **dass** dieses Mittel zum Empfang von Meldungen des Vermittlungsknotens über Zustandsänderungen und/oder über das
Auftreten vorgebbarer Ereignisse umfasst,
- **dass** dieses Mittel zur Ausgabe eines Sprachbausteins auf einem Kanal des Systems umfasst und
- **dass** dieses Mittel zur Verbindung dieses Kanals mit einem
Gesprächskanal des Telekommunikationsnetzes umfasst.
